# EUROPÄISCHE PATENTSCHRIFT

(11) **EP 1 422 917 B1**
(45) Veröffentlichungstag und Bekanntmachung des Hinweises auf die Patenterteilung: **07.09.2016**
(21) Anmeldenummer: 03016745.6
(22) Anmeldetag: 23.07.2003
(51) Int. Cl.: H04M 9/00, H04M 9/02

(54) **Verfahren zur Steuerung einer Türsprechanlage**
Interphone control method
Procédé de contrôle d'interphone

(30) Priorität: 20.11.2002 DE 10254273
(43) Veröffentlichungstag der Anmeldung: 26.05.2004
(73) Patentinhaber: Ritto GmbH & Co.KG, 35708 Haiger (DE)
(72) Erfinder: Neumann, Udo, 58579 Schalksmühle (DE); Heppner, Manfred, 35708 Haiger (DE); Schneider, Thorsten, 35096 Weimar-Roth (DE)
(74) Vertreter: Herrmann, Jochen

(56) Entgegenhaltungen:
- EP-A- 0 874 511
- DE-A1- 3 130 123
- DE-A1- 10 020 257
- DE-A1- 19 548 744

## Beschreibung

Die Erfindung betrifft ein Verfahren zur Steuerung einer Türsprechanlage gemäß dem Oberbegriff des Anspruchs 1. Demgemäß überträgt eine Türstation ein Steuersignal über ein Netzgerät an ein Wohntelefon und das Wohntelefon oder eine dem Wohntelefon zugeordnete Schalteinheit nimmt ein Gebäudebus-Signal aus einem Gebäudebussytem mittels eines Busankopplers auf.

Aus der DE 100 20 257 A1 ist ein derartiges Verfahren zur Steuerung einer Telefonanlage mit integrierter Türsprechanlage bekannt. Bei der Telefonanlage ist eine Türstation und Wohntelefone über einen Busankoppler an ein GebäudebusSystem angeschlossen.

Weiterhin betrifft die Erfindung eine Türsprechanlage nach dem Oberbegriff des Anspruchs 9..

Ein Verfahren zur Steuerung einer Türsprechanlage ist auch aus der DE 197 16 599 C2 bekannt. Dabei ist die Türstation mit dem Netzgerät und das Netzgerät mit dem Wohntelefon über eine Zwei-Draht-Busleitung verbunden. Über diese Busleitung werden sowohl die Wahlsignale der Türstation, als auch der Sprachverkehr zwischen der Türstation und dem Wohntelefon geleitet.

Bei Gebäuden werden zunehmend sogenannte Gebäude-Bussysteme eingesetzt. Diese werden zur Steuerung und Verwaltung von Gebäudefunktionen verwendet. Dabei werden genormte Befehle über das Gebäude-Bussystem übertragen. Diese Befehle dienen im Wesentlichen zum Schalten von Verbrauchern. In der Gebäudesystemtechnik hat sich das Bussystem KNX-EIB etabliert. An dieser Stelle sei erwähnt, dass im Rahmen der Erfindung unter der Bezeichnung KNX-EIB-Bus oder KNX-EIB-Signal alle äquivalent arbeitenden Bussysteme oder Signaltypen eingeschlossen sind.

Es ist Aufgabe der Erfindung ein Verfahren der eingangs erwähnte Art zu schaffen, mit dem die Funktionalität einer Türsprechanlage verbessert werden kann.

Es ist auch Aufgabe der Erfindung eine derart funktionell verbesserte Türsprechanlage zu schaffen.

Die Aufgabe der Erfindung wird verfahrenstechnisch durch die Merkmale des Anspruchs 1 dadurch gelöst, dass das Netzgerät oder eine dem Netzgerät zugeordnete Schalteinheit das Steuersignal in ein Gebäudebus-Signal des Gebäudebussystems wandelt und dieses an das Wohntelefon über einen Buskoppler überträgt. Zur sicheren Sprachführung wird die Sprachübertragung zwischen dem Netzgerät und dem Wohntelefon über eine zusätzlich zum Gebäudebussystem installierte Sprachübertragungsleitung geführt.

Vorrichtungstechnisch wird die Aufgabe durch die Merkmale des Anspruchs 9 gelöst.

Die Türsprechanlage ist im Bereich ihres Netzgerätes und des Wohntelefones mit einem Busankoppler erweitert. Damit kann die Türsprechanlage an einen KNX-EIB-Gebäudebus angeschlossen werden. Über den so geschaffenen KNX-EIB-Übertragungsweg zwischen dem Netzgerät und dem Wohntelefon lässt sich das Steuersignal, beispielsweise über das Wahlsignal der Türstation in codegewandelter Form an das Wohntelefon übertragen. Damit wird die Türsprechanlage Teil der Gebäudebusanlage, wodurch sich deren Funktionalität erweitert.

Gemäß einer bevorzugten Ausgestaltungsvariante der Erfindung kann es vorgesehen sein, dass das Wohntelefon mittels eines Mikrokontroller ein Gebäudebus-Signal erzeugt und über den Busankoppler auf das Gebäudebussystem aufschaltet, und dass das Netzgerät nach Aufnahme dieses Gebäudebus-Signals die Sprachübertragung zwischen der Türstation und dem Wohntelefon freischaltet.

Das Wohntelefon kann dann als Sendeeinheit über das Gebäudebussystem einen Schaltbefehl übertragen. Dieser wird im Netzgerät zur Sprachfreischaltung umgesetzt.

Das Wohntelefon kann auf Veranlassung eines Schalters, beispielsweise eines Gabelschalters von dem Mikrokontroller des Wohntelefons das Gebäudebus-Signal erzeugt werden.. Dieser Schalter kann dann zur Steuerung von nicht Sprechanlagen bezogener Gebäudefunktionen verwendet werden.

Eine mögliche Ausführung der Erfindung kann derart verwirklicht sein, dass das Netzgerät vom Wohntelefon das Gebäudebus-Signal zur Sprachübertragung über den Busankoppler empfängt und dieses in dem Mikrokontroller des Netzgerätes wandelt, und dass der Mikrokontroller einen Polaritätsumschalter ansteuert, der die Sprachverbindung zwischen der Türstation und dem Wohntelefon freischaltet.

Die Übertragung des von der Türstation kommenden Wahlsignals kann beispielweise derart abgewickelt werden, dass von der Türstation als Steuersignal ein Klingelsignal an das Netzgerät über eine Anschlussleitung übertragen wird, und dass das Netzgerät das Klingelsignal über einen Polaritätsumschalter, eine Sende/Empfangsstufe, einen Mikrokontroller und eine Busankopplung in das Gebäudebus-Signal wandelt.

Das im Netzgerät erzeugte, dem Steuersignal der Türstation zugeordnete Gebäudebus-Signal kann vom Busankoppler des Netzgerätes auf das Gebäudebussystem aufgeschaltet werden, wobei das Wohntelefon das Gebäudebus-Signal über seinen Busankoppler und seinen Mikrokontroller aufnimmt, und ein Lautsprecher des Wohntelefones vom Mikrokontroller angesteuert und ein Rufsignal ausgegeben wird.

Zur Integration der Türöffner-Funktion in das erfindungsgemäße Verfahren ist eine mögliche Erfindungsvariante derart, dass auf die Betätigung einer Einstelltaste am Wohntelefon hin im Wohntelefon ein Türöffner-Gebäudebus-Signal erzeugt und über den Busankoppler auf das Gebäudebussystem aufgeschaltet wird, und dass das Netzgerät dieses Türöffner-Gebäudebus-Signal aufnimmt und dann den Türöffner ansteuert.

Der Etagenruf lässt sich dann einfach über das Gebäudebussystem übertragen wenn vorgesehen ist, dass das Wohntelefon auf Veranlassung eines Etagendrückers ein Etagendrücker-Gebäudebus-Signal über seinen Busankoppler auf das Gebäudebussystem überträgt, und dass dieses Etagendrücker-Gebäudebus-Signal von wenigstens einem weiteren Wohntelefon aufgenommen und in ein Rufsignal gewandelt wird.

Die Erfindung wird im Folgenden anhand eines in der Zeichnung dargestellten Ausführungsbeispiels näher erläutert. Es zeigen:
- Fig. 1: als schematischer Schaltungsaufbau eine Türsprechanlage und ein Gebäudebussystem;
- Fig. 2: als schematischer Schaltungsaufbau ein Netzgerät der Türsprechanlage gemäß Fig. 1;
- Fig. 3: als schematischer Schaltungsaufbau ein Wohntelefon der Türsprechanlage gemäß Fig. 1 und
- Fig. 4: eine Detailierung des in der Fig. 1 dargestellten, die Türsprechanlage betreffenden Schaltungsaufbaus.

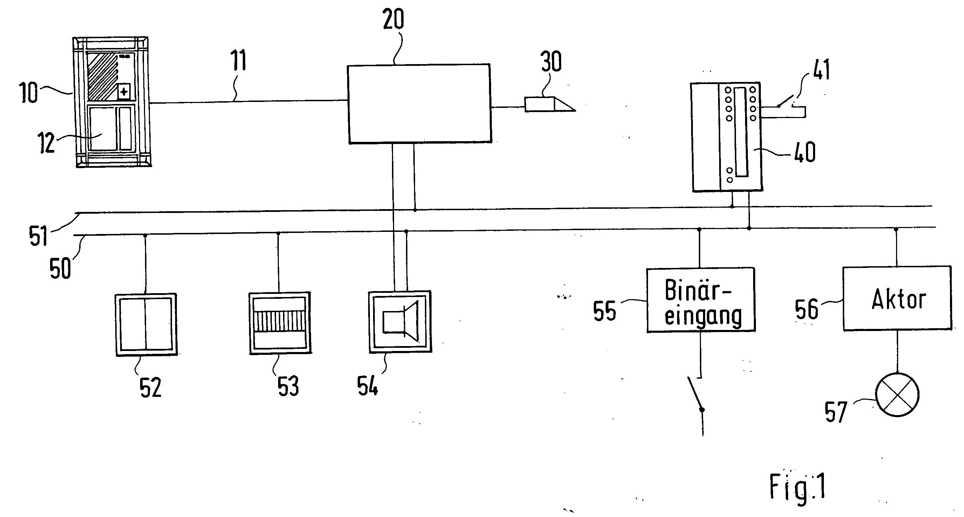

In der Fig. 1 ist ein Gebäudebus 50 eines KNX-EIB-Gebäudebussystems dargestellt. Der Gebäudebus 50 kann in einem Haus installiert sein. Es sind verschiedene Einheiten an den Gebäudebus 50 angeschlossen. Beispielhaft sind in der Fig. 1 ein Tastensensor 52, ein Bewegungsmelder 53, ein über einen Meldekontakt anschaltbarer Binäreingang 55 oder ein Aktor 56, der beispielsweise einen Verbraucher 57 ansteuert dargestellt. Vorliegend ist nur eine Auswahl von möglichen, an ein KNX-EIB-System anschaltbaren Einheiten dargestellt. Dem Fachmann sind eine Vielzahl weiterer Einheiten geläufig.

In der Fig. 1 ist weiterhin eine Türsprechanlage dargestellt. Diese umfaßt eine Türstation 10, ein Netzgerät 20 und ein Wohntelefon 40. Die Türstation 10 umfaßt eine Klingeltaste 12. Wenn mehrere Wohntelefone 40 an der Türsprechanlage betrieben werden sollen, erhöht sich die Anzahl der Klingeltasten 12 entsprechend. Die Türstation 10 ist über eine zweiadrige Anschlußleitung 11 an das Netzgerät 20 angeschlossen. Das Netzgerät 20 steht mit dem Gebäudebus 50 in Verbindung. Weiterhin ist das Netzgerät 20 auch an eine Sprachübertragungs-Leitung 51 angeschlossen.

Die Sprachübertragungs-Leitung 51 ist auch an das Wohntelefon 40 angeschlossen. Weiterhin ist auch eine Ankopplung des Gebäudebuses 50 zu dem Wohntelefon 40 vorhanden.

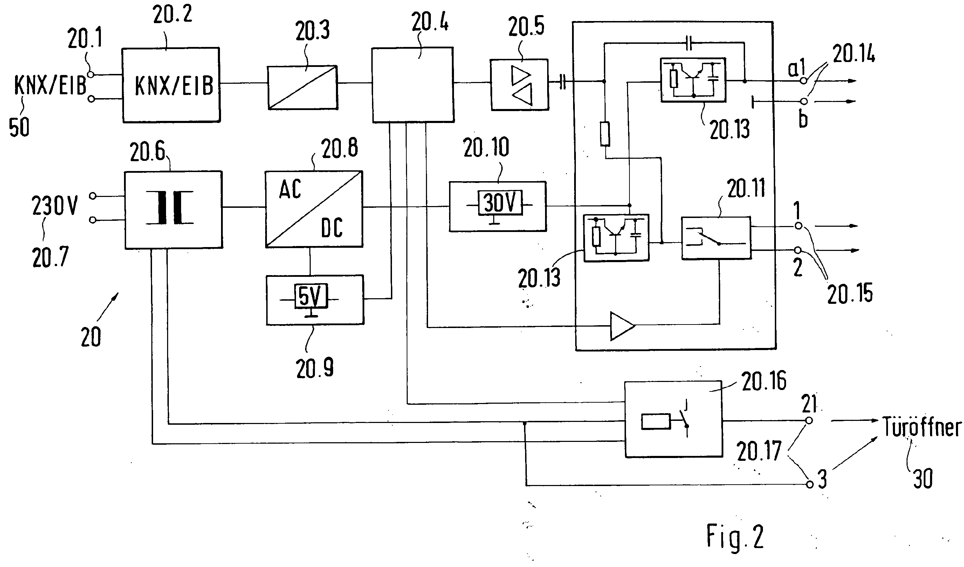

In der Fig. 2 ist der Aufbau des Netzgerätes 20 in Teilfunktionen schematisch dargestellt. Wie diese Darstellung erkennen läßt, besitzt das Netzgerät 20 einen Busankoppler 20.2 über dessen Anschlußklemmen 20.1 der Gebäudebus 50 ankoppelbar ist. Der Busankoppler 20.2 ist über eine Potentialtrennung 20.3 und einen Mikrokontroller 20.4 an eine Sende/Empfangsstufe 20.5 angeschlossen.

Die in der Fig. 1 gezeigte Sprachübertragungs-Leitung 51 ist an die Anschlußklemmen 20.14 (a₁ und b) gelegt.

Das Netzgerät 20 ist über einen Transformator 20.6 an ein 230V Netz 20.7 angelegt. In einer Spannungsversorgung 20.8 wird die vom Transformator 20.6 heruntertransformierte Spannung in Gleichstrom gewechselt. Das Wohntelefon 40 wird von der Spannungsversorgung 20.8 über die Gleichspannungsankopplung 20.13 gespeist. Die Türstation 10 wird von der Gleichspannungsankopplung 20.13 gespeist.

Ein Spannungsregler 20.10 versorgt die beiden Gleichspannungsankopplungen 20.13 mit der richtigen Spannung.

Der Mikrokontroller 20.4 ist über einen Spannungsregler 20.9 an die Spannungsversorgung 20.8 angeschlossen. Wie die Fig. 2 weiter veranschaulicht, kann an das Netzgerät 20 ein Türöffner 30 angeschlossen werden (Anschlußkontakte 20.17). Der Anschluß erfolgt über eine Relaisschaltung 20.16 an den Transformator 20.6.

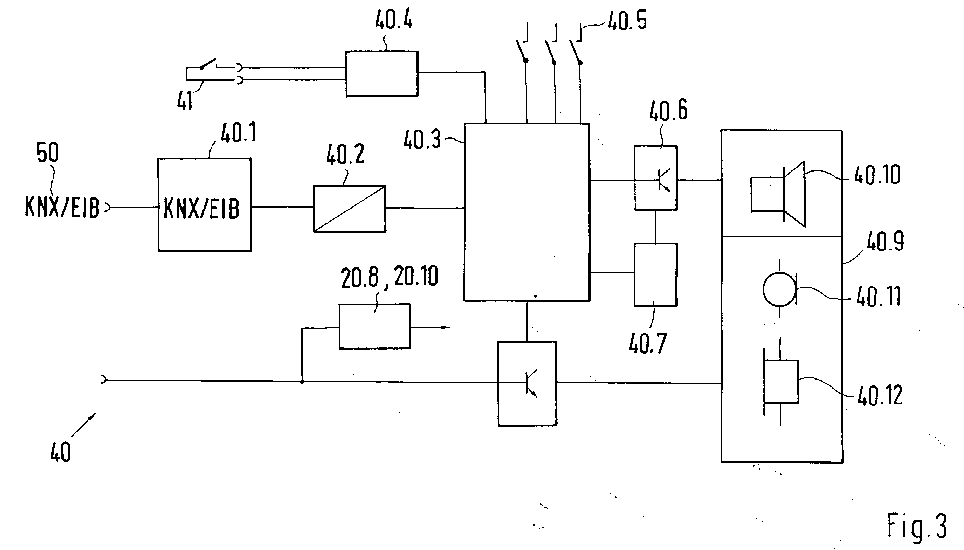

Die Fig. 3 zeigt den schematischen Teilaufbau eines Wohntelefons 40.

Das Wohntelefon 40 weist einen Busankoppler 40.1 auf, der über eine Potentialtrennung 40.2 an einen Mikrokontroller 40.3 angeschaltet ist. Der Mikrokontroller 40.3 versorgt einen Handapparat 40.9 über einen Verstärker 40.6 mit Signalen. Der Handapparat 40.9 umfaßt einen Lautsprecher 40.10, ein Mikrofon 40.11 und eine Hörkapsel 40.12. Der Verstärker 40.6 steht auch in Verbindung mit einem Sprachspeicher 40.7. Darin können bestimmte Sprachsequenzen abgelegt sein, die auf Veranlassung des Mikrokontrollers 40.3 vom Lautsprecher 40.10 ausgegeben werden.

Der Handapparat 40.9 ist an die Sprachübertragungs-Leitung 51 mittels eines Verstärkers 40.13 angeschlossen.

Das Wohntelefon 40 wird über die Spannungsversorgung 20.8, 20.10 des Netzgerätes 20 versorgt.

Nachfolgend wird unter Bezugnahme auf die Figuren 1 bis 4 die Funktion der Türsprechanlage erläutert. Dabei soll zunächst die Vorgehensweise bei der Übertragung des Wahlsignals der Türstation 10 dargestellt werden. Über die Klingeltaste 12 der Türstation 10 wird ein Wahlsignal generiert und auf die Anschlußleitung 11 aufgeschaltet. Gemäß Fig. 2 empfängt das Netzgerät 20 das Wahlsignal und leitet es über den Polaritätsumschalter 20.11 und die Sende/Empfangsstufe 20.5 an den Mikrokontroller 20.4 weiter. Dieser erzeugt ein KNX-EIB-Signal, welches über die Potentialtrennung 20.3 und den Busankoppler 20.2 auf den Gebäudebus 50 aufgeschaltet wird. Das KNX-EIB-Signal enthält als Telegramm die Adresse des anzusprechenden Wohntelefons 40. Gemäß Fig. 3 empfängt das Wohntelefon 40 das KNX-EIB-Signal über den Busankoppler 40.1 und liest es aus, wenn dieses Wohntelefon 40 adressiert wurde.

Der Mikrokontroller 40.3 des Wohntelefones 40 bildet dann ein Signal, welches über den Verstärker 40.6 an den Lautsprecher 40.10 geleitet wird. Der Lautsprecher 40.10 gibt dann ein Rufsignal ab.

Nachfolgend wird nun der Aufbau der Sprechverbindung zwischen der Türstation 10 und dem Wohntelefon 40 erläutert.

Wenn das Wohntelefon 40 gerufen wurde, betätigt der Anwender eine, an den Mikrokontroller 40.3 angeschlossene Einstelltaste 40.5. Dies kann beispielsweise der Gabelschalter des Wohntelefons 40 sein.

Der Mikrokontroller 40.3 schaltet dann ein KNX-EIB-Signal über den Busankoppler 40.1 auf den Gebäudebus 50 auf. Dieses KNX-EIB-Signal adressiert das Netzgerät 20 und wird von diesem ausgelesen (Busankoppler 40.1). Der Mikrokontroller 20.4 schaltet den Polaritätsschalter 20.11 um. Damit wird dann das Wohntelefon 40 auf die Spannungsverbindungs-Leitung 51 aufgeschaltet. Der Sprachverkehr wird vom Netzgerät 20 dann über die Anschlußkontakte 20.14 und 20.15 des Netzgerätes 20 zur Türstation 10 durchgestellt (Hörkapsel 40.12 und Mikrofon 40.11).

Wie die Fig. 3 erkennen läßt, kann an den Mikrokontroller 40.3 des Wohntelefons 40 über eine Pegelanpassung 40.4 ein Etagendrücker 41 angeschlossen werden. Bei Betätigung des Etagendrückers 41 wird vom Mikrokontroller 20.4 ein Signal an den Lautsprecher 40.10 abgegeben. Dieser erzeugt dann ein Rufsignal.

Dem Wohntelefon 40 sind Einstelltasten 40.5 zugeordnet. Über diese Einstelltasten 40.5 können bestimmte Adressen des KNX-EIB-Systems gespeichert werden.

Wie die Fig. 3 weiter erkennen läßt, ist dem Wohntelefon 40 ein Sprachspeicher 40.7 zugeordnet. Die darin abgelegten Sprachsequenzen können bei Eingang eines vom Gebäudebus 50 kommenden entsprechenden KNX-EIB-Signals abgerufen und akustische Meldungen über den Lautsprecher 40.10 ausgegeben werden.

Dies können z. B. Warnhinweise sein wie:
"Fenster auf", "Bewegung im Außenbereich", "Einbruch",
"Feuer" etc. für den Fall, dass ein Fensterkontaktschalter, ein Bewegungsmelder etc. ein Schaltsignal auf den Gebäudebus 50 aufgibt.

Die Beschaltung des Türöffners 30 (s. Fig. 2) erfolgt vom Wohntelefon 40 aus. Wenn am Wohntelefon 40 eine Türöffnertaste gedrückt wird, wird ein KNX-EIB-Signal erzeugt und auf den Gebäudebus 50 aufgegeben (Busankoppler 20.2). Das Netzgerät 20 liest am Busankoppler 20.2 das KNX-EIB-Signal aus. Der Mikrokontroller 20.4 erzeugt daraus ein Schaltsignal, das an die Relaisschaltung 20.16 übergeben wird. Die Relaisschaltung 20.16 schließt dann den vom Transformator 20.6 gespeisten Stromkreis.

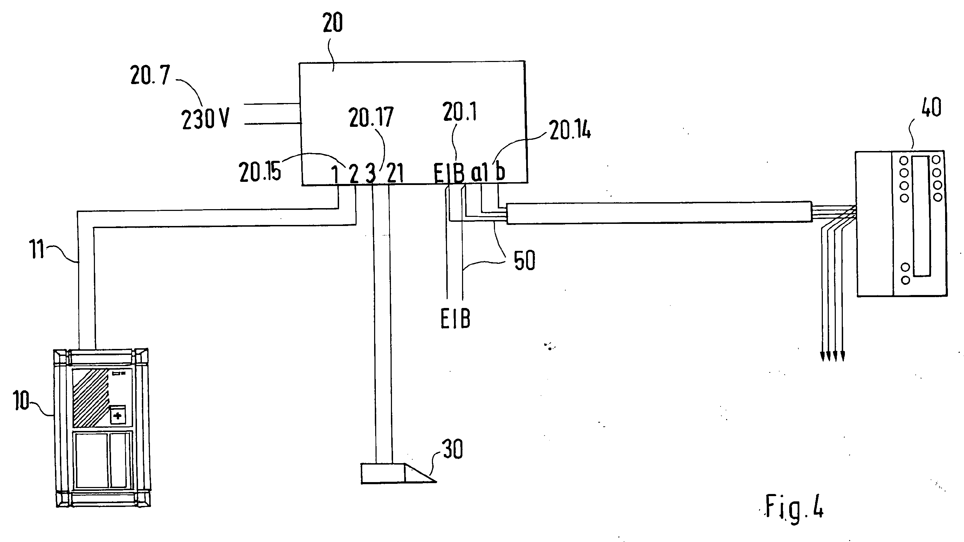

In der Fig. 4 ist der Aufbau der Türsprechanlage detailiert dargestellt. Hieraus ist ersichtlich, dass die Anschlußleitung 11 zweiadrig zwischen der Türstation 10 und dem Netzgerät 20 geführt ist. Die Sprachübertragungs-Leitung 51 ist eben falls zweiadrig ausgebildet. Ebenso der Gebäudebus 50. An den Gebäudebus 50 und die Sprachübertragungs-Leitung 51 können mehrere Wohntelefone 40 parallel angeschaltet werden. Anstatt der Klingeltaste 12 in der Türstation 10 kann auch ein Codeschloß verwendet werden. Dies erzeugt dann in Zusammenarbeit mit der Türstation 10 das den jeweiligen Wohntelefon 40 zugeordnete Wahlsignal.

## Patentansprüche

1. Verfahren zur Steuerung einer Türsprechanlage, wobei eine Türstation (10) ein Steuersignal über ein Netzgerät (20) an ein Wohntelefon (40) überträgt, und
wobei das Wohntelefon (40) oder eine dem Wohntelefon (40) zugeordnete Schalteinheit ein Gebäudebus-Signal aus einem Gebäudebussytem (50) mittels eines Busankopplers (40.1) aufnimmt,
**dadurch gekennzeichnet,**
**dass** das Netzgerät (20) oder eine dem Netzgerät (20) zugeordnete Schalteinheit das Steuersignal in ein Gebäudebus-Signal des Gebäudebussystems (50) wandelt und dieses an das Wohntelefon (40) über einen Busankoppler (20.2) überträgt, und
**dass** die Sprachübertragung zwischen dem Netzgerät (20) und dem Wohntelefon (40) über eine zusätzlich zum Gebäudebussystem (50) installierte Sprachübertragungsleitung (51) geführt wird.

2. Verfahren nach Anspruch 1,
**dadurch gekennzeichnet,**
**dass** das Wohntelefon (40) mittels eines Mikrokontrollers (40.3) ein Gebäudebussystem-Signal erzeugt und über den Busankoppler (40.1) auf das Gebäudebussystem (50) aufschaltet, und
**dass** das Netzgerät (20) nach Aufnahme dieses Gebäudebus-Signals die Sprachübertragung zwischen der Türstation (10) und dem Wohntelefon (40) freisschaltet.

3. Verfahren nach Anspruch 1 oder 2,
**dadurch gekennzeichnet,**
**dass** auf Veranlassung eines Schalters, beispielsweise eines Gabelschalters von dem Mikrokontroller (40.3) des Wohntelefons (40) das Gebäudebus-Signal erzeugt wird.

4. Verfahren nach einem der Ansprüche 1 bis 3,
**dadurch gekennzeichnet,**
**dass** das Netzgerät (20) vom Wohntelefon (40) das Gebäudebus-Signal zur Sprachübertragung über den Busankoppler (20.2) empfängt und dieses in dem Mikrokontroller (20.4) des Netzgerätes (20) wandelt, und
**dass** der Mikrokontroller (20.4) einen Polaritätsumschalter (20.11) ansteuert, der die Sprachverbindung zwischen der Türstation (10) und dem Wohntelefon (40) freischaltet.

5. Verfahren nach einem der Ansprüche 1 bis 4,
**dadurch gekennzeichnet,**
**dass** von der Türstation (10) als Steuersignal ein Klingelsignal an das Netzgerät (20) über eine Anschlussleitung (11) übertragen wird, und
**dass** das Netzgerät (20) das Klingelsignal über einen Polaritätsumschalter (20.11), eine Sende/Empfangsstufe (20.5), den Mikrokontroller (20.4) und einer Busankopplung (20.1) in das Gebäudebus-Signal wandelt.

6. Verfahren nach Anspruch 5,
**dadurch gekennzeichnet,**
**dass** das im Netzgerät (20) erzeugte, dem Steuersignal der Türstation (10) zugeordnete Gebäudebus-Signal vom Busankoppler (20.2) des Netzgerätes (20) auf das Gebäudebussystem aufgeschaltet wird,
**dass** das Wohntelefon (40) das Gebäudebus-Signal über seinen Busankoppler (40.1) und seinen Mikrokontroller (40.3) aufnimmt, und
**dass** ein Lautsprecher (40.10) des Wohntelefons (40) vom Mikrokontroller (40.3) angesteuert und ein Rufsignal ausgegeben wird.

7. Verfahren nach einem der Ansprüche 1 bis 6,
**dadurch gekennzeichnet,**
**dass** auf die Betätigung einer Einstelltaste (40.5) am Wohntelefon (40) hin im Wohntelefon (40) ein Türöffner-Gebäudebus-Signal erzeugt und über den Busankoppler (40.1) auf das Gebäudebussystem aufgeschaltet wird, dass das Netzgerät (20) dieses Türöffner-Gebäudebus-Signal aufnimmt und dann den Türöffner (30) ansteuert.

8. Verfahren nach einem der Ansprüche 1 bis 7,
**dadurch gekennzeichnet,**
**dass** das Wohntelefon (40) auf Veranlassung eines Etagendrückers (41) ein Etagendrücker-Gebäudebus-Signal über seinen Busankoppler (40.1) auf das Gebäudebussystem (50) überträgt, und
**dass** dieses Etagendrücker-Gebäudebus-Signal von wenigstens einem weiteren Wohntelefon (40) aufgenommen und in ein Rufsignal gewandelt wird.

9. Türsprechanlage mit einer Türstation (10), einem Netzgerät (20) und wenigstens einem Wohntelefon (40), wobei die Türstation (10) zur Übertragung eines Steuersignals über das Netzgerät (20) an das Wohntelefon (40) über eine Anschlussleitung (11) mit dem Netzgerät (20) in Verbindung steht und das Wohntelefon (40) mit dem Netzgerät (20) verdrahtet ist,
wobei das Wohntelefon (40) oder eine dem Wohntelefon (40) zugeordnete Schalteinheit jeweils einen Busankoppler (40.1) aufweist, an den ein Gebäudebussystem (50) zur Aufnahme eines Gebäudebus-Signals anschließbar ist,
**dadurch gekennzeichnet,**
**dass** das Netzgerät (20) oder eine dem Netzgerät (20) zugeordnete Schalteinheit zur Wandlung des Steuersignals in ein Gebäudebus-Signal des Gebäudebussystems (50) und zur Übertragung des Gebäudebus-Signals an das Wohntelefon (40) diesen Busankoppler (20.2) aufweist, und
**dass** das Netzgerät (20) mittels einer zusätzlich zum Gebäudebussystem (50) installierten Sprachübertragungsleitung (51) an das Wohntelefon (40) anschließbar ist.

10. Türsprechanlage nach Anspruch 9,
**dadurch gekennzeichnet,**
**dass** das Wohntelefon (40) einen Mikrokontroller (40.3) zur Generierung eines Gebäudebus-Signales aufweist,
**dass** der Mikrokontroller an den Busankoppler (40.1) angeschlossen ist,
**dass** das Netzgerät (20) über seinen Busankoppler (20.2) dieses Gebäudebus-Signal empfängt, und
**dass** mittels des Netzgerätes (20) der Sprachübertragungsweg zwischen der Türstation (10) und dem Wohntelefon (40) über einen Polaritätsumschalter (20.11) freischaltbar ist.

## Claims

1. A method for the control of a door intercom system, wherein a door station (10) transmits a control signal via a power supply unit (20) to a residential phone (40), and wherein the residential phone (40) or a switching unit assigned to the residential phone (40) receives a building bus signal from a building bus system (50) by means of a bus coupling unit (40.1),
**characterized in**
**that** the power supply unit (20) or a switching unit assigned to the power supply unit (20) converts the control signal into a building bus signal of the building bus system (50) and transmits this to the residential phone (40) via a bus coupling unit (20.2), and
**that** the voice transmission between the power supply unit (20) and the residential phone (40) is made via a voice transmission line (51) installed in addition to the building bus system (50).

2. A method according to Claim 1,
**characterized in**
**that** the residential phone (40) generates a building bus system signal by means of a micro-controller (40.3) and via the bus coupling unit (40.1) connects to the building bus system (50), and
**that** the power supply unit (20) after receipt of this building bus signal releases the voice transmission between the door station (10) and the residential phone (40).

3. A method according to Claim 1 or 2,
**characterized in**
**that** at the instigation of a switch, for example, a hook switch, the building bus signal is generated by the micro-controller (40.3) of the residential phone (40).

4. A method according to any one of Claims 1 to 3,
**characterized in**
**that** the power supply unit (20) receives the building bus signal for the voice transmission from the residential phone (40) via the bus coupling unit (20.2) and converts this in the micro-controller (20.4) of the power supply unit (20) and that the micro-controller (20.4) actuates a polarity changeover switch (20.11), which releases the voice connection between the door station (10) and the residential phone (40).

5. A method according to any one of Claims 1 to 4,
**characterized in**
**that** a bell signal is transmitted from the door station (10) as a control signal to the power supply unit (20) via a connection line (11), and that the power supply unit (20) converts the bell signal via a polarity changeover switch (20.11), a transmitting/receiving level (20.5), the micro-controller (20.4) and a bus coupling unit (20.1) into the building bus signal.

6. A method according to Claim 5,
**characterized in**
**that** the building bus signal generated in the power supply unit (20) and assigned to the control signal of the door station (10) is connected by the bus coupling unit (20.2) of the power supply unit (20) to the building bus system,
**that** the residential phone (40) receives the building bus signal via its bus coupling unit (40.1) and its micro-controller (40.3), and
**that** a loudspeaker (40.10) of the residential phone (40) is actuated by the micro-controller (40.3) and a call signal is outputted.

7. A method according to any one of Claims 1 to 6,
**characterized in**
**that** upon the activation of the select button (40.5) on the residential phone (40) a door opening-building bus signal is generated in the residential phone (40) and is connected via the bus coupling unit (40.1) to the building bus system,
**that** the power supply unit (20) receives this door opening-building bus signal and then actuates the door opener (30).

8. A method according to any one of Claims 1 to 7, **characterized in**
**that** the residential phone (40) at the instigation of a floor printer (41) transmits a floor printer-building bus signal via its bus coupling unit (40.1) to the building bus system (50), and
**that** this floor printer-building bus signal is received by at least one further residential phone (40) and is converted into a call signal.

9. A door intercom system with a door station (10), a power supply unit (20) and at least one residential phone (40), wherein the door station (10) is connected for the transmission of a control signal via the power supply unit (20) to the residential phone (40) via a connection line (11) with the power supply unit (20) and the residential phone (40) is wired with the power supply unit (20),
wherein the residential phone (40) or a switching unit assigned to the residential phone (40) in each case has a bus coupling unit (40.1), to which a building bus system (50) can be connected for the reception of a building bus signal,
**characterized in**
**that** the power supply unit (20) or a switching unit assigned to the power supply unit (20) has this bus coupling unit (20.2) for the conversion of the control signal into a building bus signal of the building bus system (50) and for the transmission of the building bus signal to the residential phone (40), and
**that** the power supply unit (20) can be connected to the residential phone (40) by means of a voice transmission line (51) installed in addition to the building bus system (50).

10. A door intercom system according to Claim 9,
**characterized in**
**that** the residential phone (40) has a micro-controller (40.3) for the generation of a building bus signal,
**that** the micro-controller is connected to the bus coupling unit (40.1),
**that** the power supply unit (20) receives this building bus signal via its bus coupling unit (20.2), and
**that** by means of the power supply unit (20) the voice transmission path between the door station (10) and the residential phone (40) can be released via a polarity changeover switch (20.11).

## Revendications

1. Procédé de commande d'une installation d'interphone, une station de porte (10) transmettant un signal de commande par l'intermédiaire d'un appareil de réseau (20) à un téléphone domestique (40), et
le téléphone domestique (40) ou une unité de commutation correspondant au téléphone domestique (40) enregistrant un signal de bus de bâtiment constitué d'un système de bus de bâtiment (50) au moyen d'un coupleur de bus (40.1),
**caractérisé en ce que**
l'appareil de réseau (20) ou une unité de commutation correspondant à l'appareil de réseau (20) convertit le signal de commande en un signal de bus de bâtiment du système de bus de bâtiment (50) et le transmet au téléphone domestique (40) par l'intermédiaire d'un coupleur de bus (20.2), et
la transmission de la voix entre l'appareil de réseau (20) et le téléphone domestique (40) est guidée par l'intermédiaire d'une ligne de transmission de voix (51) installée en plus du système de bus de bâtiment (50).

2. Procédé selon la revendication 1,
**caractérisé en ce que**
le téléphone domestique (40) génère, au moyen d'un micro-contrôleur (40.3), un signal de bus de bâtiment et l'applique, par l'intermédiaire du coupleur de bus (40.1), au système de bus de bâtiment (50), et
l'appareil de réseau (20) libère, après enregistrement de ce signal de bus de bâtiment, la transmission de la voix entre la station de porte (10) et le téléphone domestique (40).

3. Procédé selon la revendication 1 ou 2,
**caractérisé en ce que**
lors de l'enclenchement d'un interrupteur, par exemple d'un crochet commutateur, le signal de bus de bâtiment est généré par le micro-contrôleur (40.3) du téléphone domestique (40).

4. Procédé selon l'une des revendications 1 à 3,
**caractérisé en ce que**
l'appareil de réseau (20) reçoit du téléphone domestique (40) le signal de bus de bâtiment pour la transmission de la voix par l'intermédiaire du coupleur de bus (20.2) et le convertit dans le micro-contrôleur (20.4) de l'appareil de réseau (20), et
le micro-contrôleur (20.4) pilote un inverseur de polarité (20.11) qui libère la liaison vocale entre la station de porte (10) et le téléphone domestique (40).

5. Procédé selon l'une des revendications 1 à 4,
**caractérisé en ce que**
un signal de sonnerie est transmis par la station de porte (10) sous la forme d'un signal de commande à l'appareil de réseau (20) par l'intermédiaire d'une ligne de connexion (11), et
l'appareil de réseau (20) convertit le signal de sonnerie dans le signal de bus de bâtiment par l'intermédiaire d'un inverseur de polarité (20.11), d'un étage d'émission/réception (20.5), du micro-contrôleur (20.4) et d'un coupleur de bus (20.1).

6. Procédé selon la revendication 5,
**caractérisé en ce que**
le signal de bus de bâtiment généré dans l'appareil de réseau (20) et correspondant au signal de commande de la station de porte (10) est appliqué par le coupleur de bus (20.2) de l'appareil de réseau (20) sur le système de bus de bâtiment,
le téléphone domestique (40) enregistre le signal de bus de bâtiment par l'intermédiaire de son coupleur de bus (40.1) et de son micro-contrôleur (40.3), et
un haut-parleur (40.10) du téléphone domestique (40) est piloté par le micro-contrôleur (40.3) et un signal d'appel est émis.

7. Procédé selon l'une des revendications 1 à 6,
**caractérisé en ce que**
lors de l'actionnement d'une touche de réglage (40.5) sur le téléphone domestique (40), un signal de bus de bâtiment pour une ouverture de porte est généré dans le téléphone domestique (40) et appliqué par l'intermédiaire du coupleur de bus (40.1) au système de bus de bâtiment,
l'appareil de réseau (20) enregistre ce signal de bus de bâtiment pour une ouverture de porte puis pilote le dispositif d'ouverture de porte (30).

8. Procédé selon l'une des revendications 1 à 7,
**caractérisé en ce que**
le téléphone domestique (40) transmet, lors de l'actionnement d'un poussoir d'étage (41), un signal de bus de bâtiment pour poussoir d'étage par l'intermédiaire de son coupleur de bus (40.1), au système de bus de bâtiment (50), et
ce signal de bus de bâtiment pour poussoir d'étage est enregistré par au moins un autre téléphone domestique (40) et est converti en un signal d'appel.

9. Installation d'interphone avec une station de porte (10), un appareil de réseau (20) et au moins un téléphone domestique (40), la station de porte (10) étant reliée, pour la transmission d'un signal de commande par l'intermédiaire de l'appareil de réseau (20) au téléphone domestique (40), par l'intermédiaire d'une ligne de connexion (11) avec l'appareil de réseau (20) et le téléphone domestique (40) est câblé avec l'appareil de réseau (20),
le téléphone domestique (40) ou une unité de commutation correspondant au téléphone domestique (40) comprend un coupleur de bus (40.1) auquel un système de bus de bâtiment (50) peut être connecté pour l'enregistrement d'un signal de bus de bâtiment,
**caractérisé en ce que**
l'appareil de réseau (20) ou une unité de commutation correspondant à l'appareil de réseau (20) comprend ce coupleur de bus (20.2) pour la conversion du signal de commande en un signal de bus de bâtiment du système de bus de bâtiment (50) et pour la transmission du signal de bus de bâtiment au téléphone domestique (40), et
l'appareil de réseau (20) peut être connecté au téléphone domestique (40) par l'intermédiaire d'une ligne de transmission de la voix (51) installée en plus du système de bus de bâtiment (50).

10. Installation d'interphone selon la revendication 9,
**caractérisée en ce que**
le téléphone domestique (40) comprend un micro-contrôleur (40.3) pour la génération d'un signal de bus bâtiment,
le micro-contrôleur est connecté au coupleur de bus (40.1),
l'appareil de réseau (20) reçoit ce signal de bus de bâtiment par l'intermédiaire de son coupleur de bus (20.2), et
le trajet de transmission de la voix entre la station de porte (10) et le téléphone domestique (40) peut être libéré au moyen de l'appareil de réseau (20) par l'intermédiaire d'un inverseur de polarité (20.11).
